# EUROPÄISCHE PATENTSCHRIFT

(11) **EP 2 113 428 B1**
(45) Veröffentlichungstag und Bekanntmachung des Hinweises auf die Patenterteilung: **01.08.2012**
(21) Anmeldenummer: 09005579.9
(22) Anmeldetag: 21.04.2009
(51) Int. Cl.: B60R 21/205, B60R 21/215

(54) **Airbaganordnung für ein Kraftfahrzeug**
Airbag assembly for a motor vehicle
Agencement d'airbag pour un véhicule automobile

(30) Priorität: 28.04.2008 DE 102008021157
(43) Veröffentlichungstag der Anmeldung: 04.11.2009
(73) Patentinhaber: Volkswagen Aktiengesellschaft, 38440 Wolfsburg (DE)
(72) Erfinder: Kirschenstein, Michael, 38165 Flechtorf (DE); Rehmke, Thomas, 29392 Wesendorf (DE); Frevert, Martin, 29389 Bad Bodenteich (DE); Azarian, Robin, 38442 Wolfsburg (DE)

(56) Entgegenhaltungen:
- EP-A- 1 880 906
- EP-B- 0 968 889
- DE-A1- 10 142 598
- DE-A1- 19 945 022
- US-A- 5 322 324
- US-A- 6 152 480
- US-A1- 2006 214 399
- US-A1- 2008 018 081

## Beschreibung

Die Erfindung betrifft eine Airbaganordnung für ein Kraftfahrzeug nach dem Oberbegriff des Patentanspruches 1.

Eine derartige Airbaganordnung ist im Beifahrerbereich einer Instrumententafel des Kraftfahrzeuges vorgesehen oder anderen Fahrzeug-Innenverkleidungen mit vergleich-barem Aufbau.

Aus der EP 0 968 889 B1 ist eine Airbaganordnung bekannt, bei der an die Unterseite eines Instrumententafel-Grundträgers als separates Teil eine Schusskanalwand montiert ist, die einen Schusskanal begrenzt. Der Schusskanal Ist von einem Airbagdeckel abgedeckt.

Innerhalb des Schusskanals kann ein Airbagmoduls vorgesehen sein: Das Airbagmodul kann beispielsweise über seitliche Haken in der Schusskanalwand eingehängt sein. Für eine einfache Montage des Airbagmoduls ist ein ausreichend großer Montagespalt zwischen dem Airbagmodul und der Schusskanalwand vorgesehen.

Um nach einer Airbag-Aktivierung einen Scheiben- oder Insassenkontakt mit dem sich öffnenden Airbagdeckel zu vermeiden, ist dieser möglichst klein zu dimensionieren. Die Größe des Airbagdeckels wird bestimmt durch den Querschnitt des Schusskanals, in dem das Airbagmodul eingehängt ist.

Wie aus der EP 0 968 889 B1 weiter hervorgeht, ist die Schusskanalwand in etwa rechtwinklig an den Airbagdeckel herangeführt. Eine solche Wandführung ist beim Einarbeiten einer Sollreißlinie zwischen dem Airbagdeckel und dem Schusskanal fertigungstechnisch von Nachteil. Die Sollreißlinie wird üblicherweise durch Materialschwächung hergestellt. Das hierzu in den Schusskanal eingeführte Werkzeug, etwa ein Laserkopf für eine Laserschwächung, kann mit seinem Werkzeugkopf nur in größerer Schrägstellung an der Innenseite des Schusskanals angesetzt werden. Durch die Schrägstellung des Werkzeuges muss daher eine nachteilig große Materialstärke der Instrumententafel überwunden werden, um bis zu einer vorgegebenen Restmaterialstärke vorzudringen. Der Energieeintrag ist daher nachteilig erhöht.

Aus der DE 199 45 022 A1 ist ein Laserbearbeitungssystem für Airbagvorrichturigstelle bekannt, das eine Einrichtung zum Erfassen einer Restmaterialstärke von der Bearbeitungsseite her aufweist.

Aus der DE 101 42 598 A ist eine gattungsgemäße Airbaganordnung mit einer trichterförmigen Schusskanalwand bekannt, die sich in Richtung auf einen Auslassschlitz verjüngt. Aus der US 2006/0214399 A und aus der EP 1 880 906 A1 ist jeweils eine weitere Airbaganordnung bekannt, bei der das Airbagmoduls mit seitlichen Hakenelementen in Montageöffnungen der Schusskanalwand eingehängt ist. Aus der US 5 322 324 A ist ebenfalls eine Airbaganordnung bekannt, bei der ein die Airbagaustrittsöffnung abdeckender Airbagdeckel über ein Filmscharnier an einer Schusskanalwand angelenkt ist.

Die Aufgabe der Erfindung besteht darin, eine Airbaganordnung für ein Kraftfahrzeug bereitzustellen, die in einfacher Fertigung mit einem Airbagdeckel reduzierter Größe herstellbar ist.

Die Aufgabe ist durch die Merkmale des Patentanspruches 1 gelöst. Bevorzugte Weiterbildungen der Erfindung sind in den Unteransprüchen offenbart.

Gemäß der Erfindung verjüngt sich der Schusskanal mit seinem Schusskanalquerschnitt in Richtung auf den Airbagdeckel. Der Schusskanal wird demzufolge nicht geradlinig in Schussrichtung des Airbagmoduls an die Unterseite der Instrumententafel herangeführt. Vielmehr verjüngt sich der Schusskanal zumindest teilweise in der Schussrichtung des Airbagmodul, wodurch die Größe des Airbagdeckels reduziert ist. Demgegenüber verbleibt der Querschnitt des Schusskanales an seinem vom Alrbagdeckel entfernten Ende ausreichend groß, um eine einfache Airbagmodul-Montage zu erreichen.

Der Schusskanal kann bevorzugt zumindest einen Verjüngungsabschnitt aufweisen, dessen vom Airbagdeckel abgewandtes Ende in einen Schusskanalteil mit größerem Schusskanalquerschnitt übergeht, und dessen dem Airbagdeckel zugewandtes Ende in einen Schusskanalteil mit kleinerem Schusskanalquerschnitt übergeht. Für eine einfache Montage kann das Airbagmodul am Schusskanalteil mit größerem Querschnitt montiert werden, insbesondere in eine Montageöffnung eingehängt werden.

Der oben genannte Verjüngungsabschnitt des Schusskanales ist bevorzugt zwischen dem Montageabschnitt für das Airbagmodul und dem Airbagdeckel vorgesehen. Auf diese Weise ist die Schusskanalwand in Schussrichtung des Airbagmoduls mit reduzierter Steifigkeit gebildet. Eine solche Wandgeometrie ist im Hinblick auf einen Abbau von Kräften vorteilig, die bei der Airbag-Aktivierung vom Airbagmoduls über den Montageabschnitt in den Schusskanal eingeleitet werden. Beim Airbag-Schuss kann nämlich die Schusskanalwand an ihrem Verjüngungsabschnitt ziehharmonikaartig elastisch deformiert werden, wodurch die Krafteinleitung in die Instrumententafel nach erfolgter Airbag-Aktivierung reduziert ist.

In einer Ausführungsform der Erfindung kann der Schusskanaltell mit kleinerem Schusskanalquerschnitt unmittelbar als eine Randkante ausgebildet sein, die ohne Längserstreckung in der Airbag-Schussrichtung lediglich eine Airbag-Durchtrittsöffnung begrenzt. Auf diese Weise ist trotz reduziertem Airbagdeckel ein ausreichend großer Montagespalt zwischen dem Airbagmodul und der seitlich begrenzenden Schusskanalwand gewährleistet.

Fertigungstechnisch einfach kann die Schusskanalwand als ein separates Bauteil mit einem Grundträger einer Instrumententafel verbunden werden. Die Schusskanalwand kann hierzu einen Tragabschnitt, etwa einen Tragschenkel, aufweisen, mit dem die Schusskanalwand sich auf dem Instrumententafel-Grundträger abstützt.

Ein weiterer Aspekt der Erfindung betrifft die Ausbildung einer Sollreißlinie, die bekanntermaßen den Airbagdeckel teilweise umzieht. Die Sollreißlinie kann beispielhaft durch Materialschwächung mittels eines Fräsers oder einer Laservorrichtung eingearbeitet werden. Hierzu ist ein Werkzeugkopf in den Schusskanal einzuführen. Für eine stabile Werkzeugführung kann der Werkzeugkopf in Ansatz mit der Innenseite des Schusskanales gebracht werden.

Aufgrund der geometrischen Gegebenheiten ist der Werkzeugkopf während des Schneidvorganges in einer Schrägstellung, wodurch sich auch die Sollreißstelle trichterförmig nach außen ausweitet. Eine solche trichterförmig Aufreißebene ermöglicht einen größeren Freigang für den Airbag. Zudem kann sich der Airbagdeckel bei Beaufschlagung von Missbrauchskräften von außen In der Trichterkontur abstützen. Insbesondere bei einer Laserschwächung kann eine zu große Schrägstellung des Laserkopfes zu einem nachteilig erhöhten Energieeintrag führen, bei der eine Fokuslage des Laserkopfes nachteilig außerhalb einer Restwandstärke liegt.

Vor diesem Hintergrund kann der Schusskanal innenseitig eine Hinterschneidung aufweisen, die entgegen der Schussrichtung des Airbagmoduls nach außen hin abgestuft ist. Auf diese Weise ist ein Montagefreiraum für das Werkzeug, etwa den Laserkopf oder den Fräskopf, bereitgestellt. Dieser kann in den Montagefreiraum hinein verlagert werden und sich auf der Abstufung des Montagefreiraums abstützen. Mit dem zusätzlichen Montagefreiraum innerhalb des Schusskanals kann eine nahezu tangentiale Laserschwächung zwischen Schusskanal und Airbagdeckel mit einer geringen Schrägstellung des Werkzeuges erreicht werden. Durch die geringe Schrägstellung des Laserkopfes kann wiederum seine Fokuslage innerhalb des zu schwächenden Materials nahe der Restwandstärke gebracht werden, wodurch die Bearbeitungsqualität steigt.

Bevorzugt kann die oben genannte Hinterschneidung für den Werkzeugansatz in Doppelfunktion gleichzeitig den Verjüngungsabschnitt des Schusskanals bilden.

Für eine bauteilreduzierte Ausführung kann der Airbagdeckel materialseinheitlich und/oder einstückig, etwa als ein Kunststoffspritzgussteil, mit der Schusskanalwand verbunden sein. In diesem Fall kann der Airbagdeckel über einen integrierten schlaufenartig in den Schusskanal ragenden Filmscharnierabschnitt in die Schusskanalwand übergehen. Der Filmscharnierabschnitt kann sich im Wesentlichen über die gesamte Länge einer Randseite des Airbagdeckels erstrecken und einen nach oben offenen, rinnenförmigen Freiraum begrenzen. Die weiteren Randseiten des Airbagdeckels können dagegen von der bereits erwähnten Sollreißstelle umzogen sein.

Um nach einer Airbag-Aktivierung ein kontrolliertes Aufbrechen des Airbagdeckels zu gewährleisten, ist es von Bedeutung, dass der Airbagdeckel leichtgängig um eine Scharnierachse des Filmscharnierabschnittes aufklappen kann. Bevorzugt ist daher der oben erwähnte, vom Filmscharnlerabschnitt begrenzte, rinnenförmige Freiraum nicht durch die oberseitig auf der Instrumententafel vorgesehene Schaumschicht gefüllt, sondern vielmehr von dieser abgetrennt. Die Schaumschicht wird nach erfolgter Montage des Schusskanals am Instrumententafel-Grundträger in einem, an sich bekannten Schäumungsvorgang auf die Oberseite des Grundträgers zusammen mit einer Slush-Haut aufgebracht.

Um während dieses Aufschäumvorganges den vom Filmscharnierabschnitt begrenzten Freiraum von der Schaumschicht abzutrennen, kann ein zusätzliches Abdeckelement vorgesehen sein, mit dem dieser Freiraum abgedeckt ist. Das Abdeckelement kann bevorzugt materialeinheitlich und/oder einstückig am Airbagdeckel integriert sein, insbesondere im Spritzgussverfahren dort angeformt werden.

Alternativ zu dem Abdeckelement kann ein Füllelement im Wesentlichen ohne eigene Formstabilität, etwa ein Weichschauelement, vor dem Schäumungsvorgang in den Freiraum des Filmschamierabschnittes eingelegt werden. Das Füllelement verhindert einerseits während des Schäumvorganges ein Eindringen von Schaummaterial in den Freiraum. Andererseits ist das Füllelement ausreichend weich gestaltet, dass bei Airbag-Aktivierung der Airbagdäckel leichtgängig aufklappen kann. Neben dem Schäumungsverfahren ist alternativ auch eine Kaschierung möglich.

Ein weiterer, nachfolgend beschriebener Aspekt der Erfindung betrifft den Montagespalt zwischen der Schusskanalwand und dem darin eingesetzten Airbagmodul. Der Montagespalt ist einerseits ausreichend groß zu dimensionieren, um eine einfache Montage bzw. Demontage des Airbagmoduls zu gewährleisten. Andererseits besteht bei einem zu großen Montagespalt die Gefahr, dass nach erfolgter Airbag-Auslösung sich der Airbag teilweise in den Montagespalt hinein entfaltet.

Vor diesem Hintergrund weist die erfindungsgemäße Airbaganordnung ein Betätigungselement auf, das bei einer Auslösung des Airbagmoduls die Schusskanalwand in Richtung auf das Airbagmodul drückt.

Erfindungsgemäß ist das Betätigungselement in Doppelfunktion gleichzeitig das airbagmodulseitige Montageelement, mit dem das Airbagmodul in die Schusskanalwand eingehängt werden kann. Bei montiertem Airbagmodul kann das zumindest eine Montageelement durch eine korrespondierende Montageöffnung der Schusskanalwand ragen und mit einem abgewinkelten Ende auf einer außenseitigen Schrägfläche der Schusskanalwand abgestützt sein.

Das Montageelement wirkt bei einer Airbag-Auslösung wie folgt mit der Schrägfläche der Schusskanalwand zusammen: Unmittelbar nach der Auslösung des Airbagmoduls erfolgt bekanntermaßen eine Rückschlag-Bewegung des Airbagmoduls entgegen der Schussrichtung. Bei der Rückschlag-Bewegung des Airbagmoduls drückt dessen Montageelement gegen die Schrägfläche der Schusskanalwand, die sich entgegen der Schusskanalrichtung schräg nach außen erstreckt. Die Schusskanalwand wird daher bei entsprechend elastischer Gestaltung nach innen abgelenkt. Durch diese Verformung der Schusskanalwand nach innen wird der das Airbagmodul umgebende Montagespalt reduziert, so dass der sich entfaltende Airbag nicht in den Montagespalt eintauchen kann.

Die oben genannte Schrägfläche kann bevorzugt durch den oben erwähnten Verjüngungsabschnitt der Schusskanalwand bereitgestellt werden, der den Schusskanalquerschnitt in Richtung auf den Airbagdeckel verjüngt.

Nachfolgend sind drei nicht von der Erfindung umfasste Vergleichsbeispiele sowie ein Ausführungsbeispiel der Erfindung anhand der beigefügten Figuren gezeigt. Es zeigen:
- Fig. 1: In einer schematischen Tellschnittdarstellung eine In der Instrumententafel eingebaute Airbaganordnung gemäß dem ersten Vergleichsbeispiel;
- Fig. 2: in einer der Fig. 1 entsprechenden Ansicht ein in den Schusskanal geführtes Werkzeug zur Bildung einer Sollreifttelle für den Airbagdeckel;
- Fig. 3: in einer Ansicht entsprechend der Fig. 1 den Airbagdeckel in vergrößerter Darstellung;
- Fig. 4: die Schusskanalwand mit integriertem Airbagdeckel in Alleinstellung;
- Fig. 5: in einer Detailschnittansicht eine Airbaganordnung gemäß dem zweiten Vergleichsbeispiel;
- Fig. 6: in einer Ansicht entsprechend der Fig. 1 eine Airbaganordnung gemäß dem dritten Vergleichsbeispiel; und
- Fig. 7: in einer Seitenschnittdarstellung entsprechend der Fig. 1 eine Airbaganordnung gemäß dem Ausführungsbeispiel.

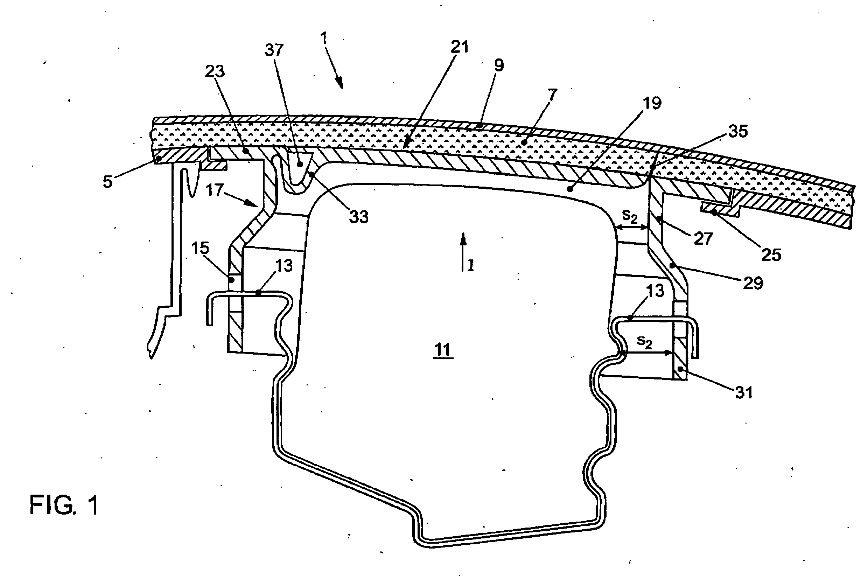

In der Fig. 1 ist in einer grob schematischen Seitenschnittdarstellung eine beifahrerseitige Instrumententafel 1 für ein Kraftfahrzeug gezeigt. Unterhalb der Instrumententafel 1 ist eine Airbaganordnung 3 vorgesehen. Die Instrumententafel weist einen Instrumententafel-Gründträger 5 mit einer aufgeschäumten Schaumschicht 7 auf, an deren Oberseite eine Slush-Haut 9 vorgesehen ist.

Die Airbaganordnung 3 weist ein an sich bekanntes Airbagmodul 11 auf, das über seitliche Montagearme 13 in gegenüber liegende Montageöffnungen 15 einer Schusskanalwand 17 der Airbaganordnung 3 eingesetzt ist. Die Schusskanalwand 17 umzieht rahmenartig das Airbagmodul 11 und kann beispielhaft von rechteckförmigem Querschnitt sein. Die Schusskanalwand 17 ist hier beispielhaft als ein vom Instrumententafel-Grundträger 5 separates Einsatz-Bauteil ausgeführt. Die Schusskanalwand 17 begrenzt weiter einen Schusskanal 19, mit dem ein sich vom Airbagmodul 11 entfaltender Airbag in Richtung auf einen Airbagdeckel 21 geführt wird.

Der Airbagdeckel 21 schließt den Schusskanal 19 nach oben hin und erstreckt sich im Wesentlichen flächenbündig mit einem seitlich von der Schusskanalwand 17 abragenden Halterahmen 23. Die Schusskanalwand 17 ist mit ihrem Halterahmen 23 auf einer Tragschulter 25 des Instrumententafel-Grundträgers 5 abgestützt, die gegenüber dem Grundträger 5 abgestuft ist und eine Montageöffnung des Grundträgers 5 begrenzt. Der Halterahmen 23 schließt dabei in etwa bündig mit der Oberseite des Grundträgers 5 ab.

Wie aus der Fig. 1 weiter hervorgeht, ragt die Schusskanalwand 17 mit einem ersten Wandteil 27 rechtwinklig vom Halterahmen 23 entgegen einer Schussrichtung 1 des Airbagmoduls 11 nach unten ab und geht in einen Verjüngungsabschnitt 29 über. An dessen, vom Airbagdeckel 21 abgewandten Ende schließt sich ein zweites Wandteil 31 an, das in etwa parallel zum ersten Wandteil 27 verläuft. Der Schusskanalquerschnitt verjüngt sich somit in Richtung auf den Airbagdeckel 21, wodurch dieser in seinem Flächenausmaß reduziert ist.

Die Montageöffnungen 15 zum Einhängen des Airbagmoduls 11 sind gemäß der Fig. 1 am zweiten Wandteil 31 mit größerem Schusskanalquerschnitt vorgesehen. Ein zwischen dem Airbagmodul 11 und dem zweiten Wandteil 31 der Schusskanalwand 17 gebildeter Montagespalt s₁ ist daher entsprechend groß gestaltet, um eine einfache Montage bzw. Demontage des Airbagmoduls 11 zu gewährleisten. Das Airbagmodul 11 ist demgegenüber so dimensioniert, dass dessen Oberseite in den ersten Wandteil 27 der Schusskanalwand 17 einragt, in dem der Montagespalt s₂ reduziert ist. Im Falle einer Aktivierung der Airbaganordnung ist aufgrund des reduzierten Montagespaltes s₂ daher die Gefahr verringert, dass sich der entfaltende Airbag teilweise in den größeren Montagespalt s₁ verlagert.

Wie aus der Fig. 1 weiter hervorgeht, ist der in der Schusskanalwand 17 integrierte Airbagdeckel 21 an einer Seite über einen Filmschamierabschnitt 33 mit der Schusskanalwand 17 verbunden. Der Filmscharnierabschnitt ragt gemäß der Fig. 1 schlaufenartig in den Schusskanal 19 hinein. Im Falle einer rechtwinkligen Gestaltung des Airbagdeckels 21 erstreckt sich der Filmscharnierabschnitt 33 entlang einer Airbagdeckel-Randseite, während die verbleibenden Airbagdeckel-Randseiten von einer Sollreißlinie 35 begrenzt sind.

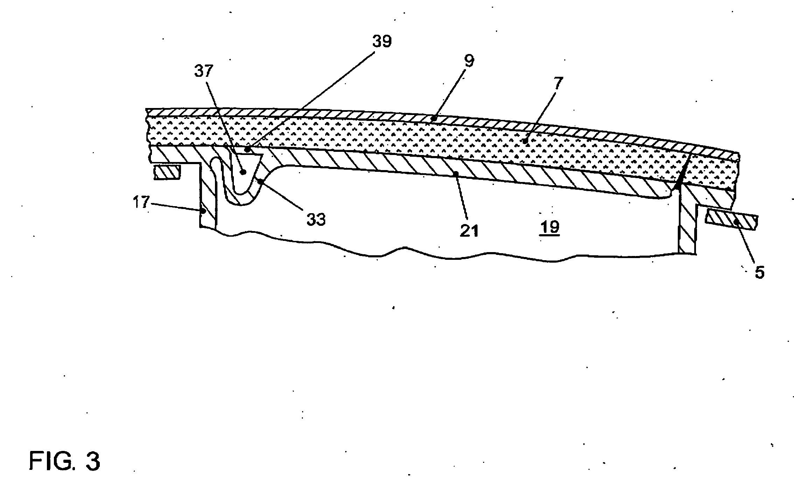

Der Filmscharnierabschnitt 33 begrenzt einen nach oben offenen, rinnenförmigen Freiraum 37, der in den Fig. 1 bis 3 nach oben hin durch eine Abdeckelement 39 abgedeckt ist. Das Abdeckelement 39 ist einseitig an dem Airbagdeckel 21 angeformt und stützt sich gemäß den Fig. 1 bis 3 mit seinem freien Ende an der gegenüber liegenden oberseitigen Biegekante des Filmscharnierabschnittes 33 ab. Das Abdeckelement 39 gewährleistet, dass während eines Schäumungsvorganges, bei dem die Schaumschicht 7 auf den Grundträger 5 aufgebracht wird, kein Schäumungsmaterial in den Freiraum 37 gelangen kann. Im rinnenförmigen Freiraum 37 des Filmscharnierabschnittes 33 können außerdem Stützwände angeordnet sein, auf denen sich das Abdeckelement 39 abstützen kann.

Nachfolgend wird die Fertigung der Airbaganordnung 3 sowie deren Einbau in der Instrumententafel 1 beschrieben. So wird zunächst die rahmenförmige Schusskanalwand 17 separat vom Grundträger 5 in einem Kunststoffspritzgussverfahren hergestellt. Das Material der Schusskanalwand ist dabei entsprechend der notwendigen Belange mit Bezug auf die Elastizität optimiert.

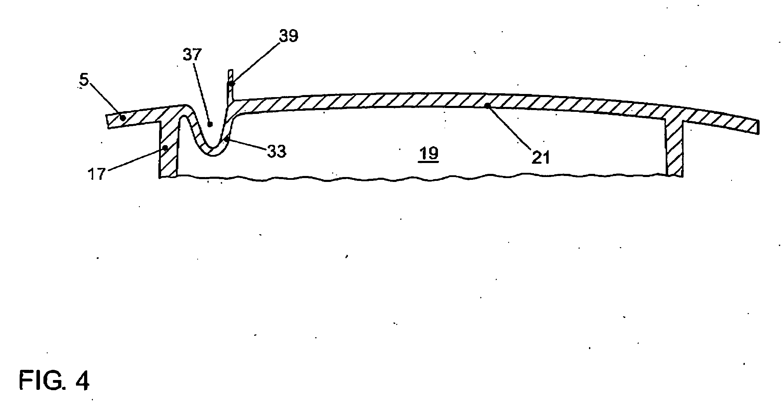

In der Fig. 4 ist die Schusskanalwand 17 mit integriertem Airbagdeckel 21 in seiner Herstellungslage beim Kunststoffspritzgießen gezeigt. Demzufolge ist das lameilenartige Abdeckelement 39 vertikal nach oben abgestellt, um eine einfache Entformungsbewegung der hier nicht gezeigten Spritzgusswerkzeuge zu ermöglichen und um Hinterschneidungen zu vermeiden.

Anschließend wird die Schusskanalwand 17 ausgehend von der, dem Fahrzeuginnenraum zugewandten Seite des Instrumententafel-Grundträgers 5 in dessen Montageöffnung eingesetzt und mit dem Halterahmen 23 auf der Tragschulter 25 des Grundträgers 5 abgestützt.

In einem nachfolgenden Schäumungsvorgang wird unter Druck die Schaumschicht 7 sowie die Slush-Haut 9 auf die Oberseite des Grundträgers 5 aufgetragen. Um ein Durchdringen des flüssigen Schäumungsmaterials durch die Montageöffnung des Grundträgers 5 zu verhindern, kann der Halterahmen 23 beispielsweise durch Ultraschweißen mit der Tragschulter 25 verbunden werden.

In einem weiteren Arbeitsschritt wird mittels Laserbearbeitung die Sollreißllnie 35 In die Instrumententafel 1 eingebracht. Hierzu wird bei noch demontiertem Airbagmodul 11 ein Laserkopf 41 einer Laserbearbeitungsvorrichtung in den Schusskanal 19 eingeführt und für eine stabile Werkzeugführung in Ansatz mit der Schusskanal-Innenseite gebracht. Der Laserkopf 41 ragt dabei teilweise in einen ringförmigen Montageraum 43, der durch den Verjüngungsabschnitt 29 bereitgestellt ist und innenseitig eine entgegen der Schussrichtung I ausgeweitete Hinterschneidung bildet.

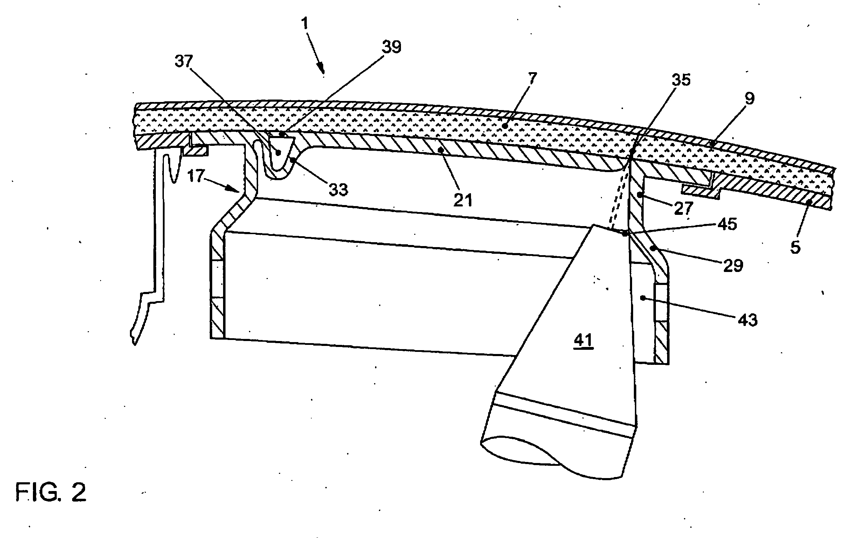

Gemäß der Fig. 2 Ist der Laserkopf 41 mit seiner Stirnseite an einer Übergangskante zwischen dem ersten Wandteil 27 und dem Verjüngungsabschnitt 29 in Ansatz gebracht. Dadurch kann in einem wesentlich steileren Winkel ein Laserschnitt erzeugt werden. Durch den steileren Bearbeitungswinkel ist die zu überwindende Materialstärke der Instrumententafel reduziert, wodurch auch der Energieeintrag reduzierbar ist. Die Werkzeug-Ansatzkante 45 zwischen dem ersten Wandteil 27 und dem Verjüngungsabschnitt 29 ist in einer vorgegebenen Höhenlage positioniert, bei der sich eine prozesstechnisch günstige Fokuslage des Laserstrahls nahe einer Restwandstärke ergibt.

Durch die parallel versetzte Lage der beiden Wandteil 27, 31 ist die Steifigkeit der Schusskanalwand 17 in der Schussrichtung I sowie in Gegenrichtung reduziert. D.h. dass die beim Airbag-Schuss auftretenden Kräfte zumindest teilweise von der Schusskanalwand 17 aufgenommen werden.

Bekanntermaßen verlagert sich das in der Schusskanalwand 17 eingehängte Airbagmodul 11 nach erfolgter Airbag-Aktivierung in einer Rückschlagbewegung zunächst entgegen der Schussrichtung 1, so dass die Schusskanalwand 17 mit ihren beiden Wandteilen 27, 31 ziehharmonikaartig auseinander gezogen wird und dadurch die Rückschlagbewegung gedämpft wird.

Bei einer folgenden Gegenbewegung des Airbagmoduls 11 in der Schussrichtung I wird demgegenüber die Schusskanalwand 17 ziehharmonikaartig zusammengedrückt.

Der sich entfaltende Airbag des Airbagmoduls 11 reißt den Airbagdeckel 11 um eine durch den Filmscharnierabschnitt 33 gebildete Scharnierachse auf. Da gemäß dem ersten Ausführungsbeispiel der vom Filmscharnierabschnitt 33 begrenzte Freiraum 37 schaumfrei ist, ist hier eine leichtgängige Öffnungsbewegung des Airbagdeckels 11 sichergestellt.

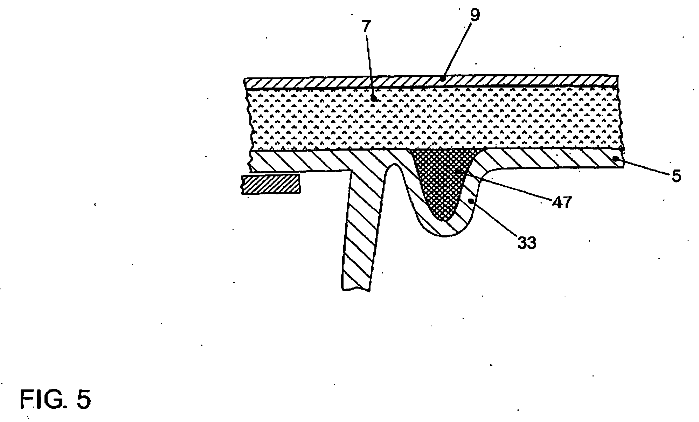

In der Fig. 5 ist eine Airbaganordnung gemäß dem zweiten Vergleichsbeispiel gezeigt, dessen Bauteile sowie Funktionsweise mit denen des ersten Ausführungsbeispieles Identisch sind. Insoweit wird Bezug auf die vorangegangene Beschreibung des ersten Vergleichsbeispiels genommen. Im Unterschied zum ersten Vergleichsbeispiel ist im Airbagdeckel 21 kein zusätzliches Abdeckelement 39 integriert, das den Freiraum 37 des Filmscharnierabschnittes 33 abdeckt. Vielmehr ist alternativ vor dem Schäumungsvorgang ein Füllelement 47 in den Freiraum 37 eingesetzt. Das Füllelement 47 ist im Vergleich zur Schaumschicht 7 im Wesentlichen ohne Formstabilität. Das Füllelement 47 beeinträchtigt daher nicht die Öffnungsbewegung des Airbagdeckels 21 die Scharnierachse.

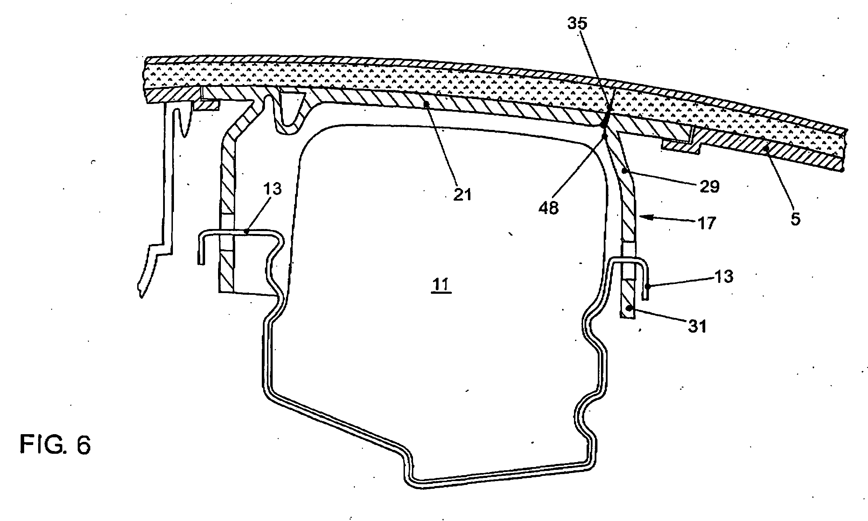

In der Fig. 6 ist eine Airbaganordnung gemäß dem dritten Vergleichsbeispiel gezeigt. Im Unterschied zu den vorangegangenen Vergleichsbeispielen ist der Verjüngungsabschnitt 29 mit seinem oberen, dem Airbagdeckel 21 zugewandten Ende bis an den Halterahmen 23 herangezogen, und zwar unter Wegfall des ersten Wandteiles 27. Der Verjüngungsabschnitt 29 begrenzt daher mit seiner oberen Randkante 48 unmittelbar eine Airbag-Durchgangsöffnung. Die Airbagdeckel-Fläche ist dabei deutlich kleiner gestaltet als der Schusskanalquerschnitt des zweiten Wandteiles 31 der Schusskanalwand 17. Mit dem verkleinerten Airbagdeckel 21 kann zuverlässig ein Scheiben-Insassenkontakt verhindert werden.

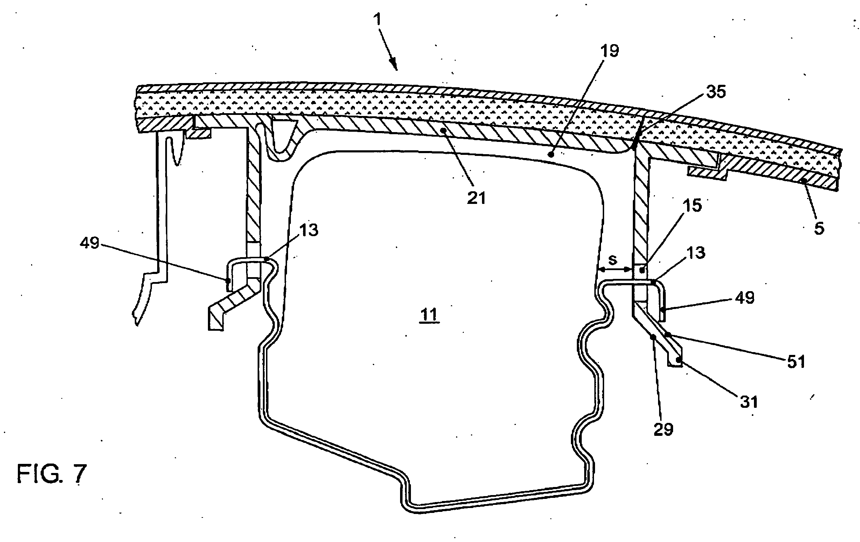

In der Fig. 7 ist eine Airbaganordnung gemäß dem Ausführungsbeispiel der Erfindung gezeigt. Im Unterschied zu den vorangegangenen Vergleichsbeispielen sind im Ausführungsbeispiel die Montageöffnungen 15 zum Einhängen des Airbagmoduls 11 nicht im zweiten Wandteil 31 mit vergrößertem Kanalquerschnitt, sondern im ersten Wandteil 27 mit reduziertem Querschnitt vorgesehen.

Die durch die Montageöffnungen 15 ragenden seitlichen Montagearme 13 des Airbagmoduls 11 sind dabei nicht unmittelbar auf den Öffnungsrand der Montageöffnungen 15 abgestützt. Vielmehr sind die seitlichen Montagearme 13 mit abgewinkelten Stützschenkeln 49 außenseitig auf dem Verjüngungsabschnitt 29 abgestützt. Der Verjüngungsabschnitt 29 bildet daher in Doppelfunktion außenseitig eine schräg gestellte Umlenkfläche 51.

Die Umlenkfläche 51 wirkt bei einer Airbag-Auslösung mit den Stützschenkeln 49 der Montagearme 13 des Airbagmoduls 11 so zusammen, dass durch die oben erwähnte Rückschlagbewegung des Airbagmoduls 11 die Schusskanalwand 17 nach innen gegen das Airbagmodul 11 gedrückt wird. Dadurch reduziert sich der Montagespalt s. Auf diese Weise ist sicher verhindert, dass der sich entfaltende Airbag teilweise in den Montagespalt s eintaucht, wodurch die Funktionsfähigkeit des Airbags gewährleistet ist.

### Bezugszeichenliste

- 1: Instrumententafel
- 3: Airbaganordnung
- 5: Instrumententafel-Grundträger
- 7: Schaumschicht
- 9: Slush-Haut
- 11: Airbagdeckel
- 13: seitliche Montagearme
- 15: Montageöffnungen
- 17: Schusskanalwand
- 19: Schusskanal
- 21: Airbagdeckel
- 23: Halterahmen
- 25: Tragschulter
- 27: erstes Wandteil
- 29: Verjüngungsäbschnitt
- 31: zweites Wandteil
- 33: Filmscharnierabschnitt
- 35: Sollreißlinie
- 37: Freiraum
- 39: Abdeckelement
- 41: Laserkopf
- 43: Montageraum
- 45: Werkzeug-Ansatzkante
- 47: Füllelement
- 48: Randkante
- 49: Stützschenkel
- 51: Umlenkfläche
- I: Schussrichtung
- s_{1,} s₂.: Montagespalt

## Patentansprüche

1. Airbaganordnung für ein Kraftfahrzeug mit einem Airbagmodul (11) und einer Schusskanalwand (17), die einen Schusskanal (19) begrenzt, der von einem Airbagdeckel (21) abdeckbar ist, wobei der Schusskanal (17) sich mit seinem Schusskanalquerschnitt in Richtung auf den Airbagdeckel (21) zumindest teilweise verjüngt, wobei der Airbaganordnung zumindest ein Betätigungselement (49) zugeordnet ist, das bei einer Auslösung des Airbagmoduls (11) die Schusskanalwand (17) zum Airbagmodul (11) drückt, **dadurch gekennzeichnet, dass** das Betätigungselement (49) ein airbagmodulseitiges Montageelement (13) zum Einhängen des Airbagmoduls (11) in die Schusskanalwand (17) ist und dass das Betätigungselement (49) bei der Auslösung des Airbagmoduls (11) die Schusskanalwand (17) von außen gegen das Airbagmodul (11) drückt.

2. Airbaganordnung nach Anspruch 1, **dadurch gekennzeichnet, dass** die Schusskanalwand (17) zumindest einen Verjüngungsabschnitt (29) aufweist, dessen vom Airbagdeckel (21) abgewandtes Ende in einen Schusskanalteil (31) mit größerem Schusskanalquerschnitt übergeht.

3. Airbaganordnung nach Anspruch 2, **dadurch gekennzeichnet, dass** der Verjüngungsabschnitt (29) an seinem dem Airbagdeckel (21) zugewandten Ende in einen Schusskanalteil (27) mit kleinerem Schusskanalquerschnitt übergeht.

4. Airbaganordnung nach Anspruch 3, **dadurch gekennzeichnet, dass** die beiden Schusskanalteile (27, 29) parallel zueinander verlaufen.

5. Airbaganordnung nach einem der Ansprüche 2 bis 4, **dadurch gekennzeichnet, dass** der Schusskanalteil (29) mit größerem Querschnitt einen Montageabschnitt (15) aufweist, an dem ein Airbagmodul (11) montierbar ist.

6. Airbaganordnung nach einem der Ansprüche 3 bis 5, **dadurch gekennzeichnet, dass** der Schusskanalteil (27) mit kleinerem Schusskanalquerschnitt unmittelbar eine, eine Airbag-Durchtrittsöffnung begrenzende Randkante (48) ohne Längserstreckung in einer Airbag-Schussrichtung (I) ist.

7. Airbaganordnung nach einem der vorhergehenden Ansprüche, **dadurch gekennzeichnet, dass** die Schusskanalwand (17) als separates Bauteil mit einem Grundträger (5) einer Instrumententafel (1) verbindbar ist.

8. Airbaganordnung nach Anspruch 7, **dadurch gekennzeichnet, dass** die Schusskanalwand (17) einen Tragabschnitt (23) aufweist, mit dem die Schusskanalwand (17) auf dem Instrumententafel-Grundträger (5) abgestützt ist.

9. Airbaganordnung nach Anspruch 8, **dadurch gekennzeichnet, dass** der Tragabschnitt (23) als ein Tragschenkel außenseitig an der Schusskanalwand (17) ausgebildet ist.

10. Airbaganordnung nach einem der vorhergehenden Ansprüche, **dadurch gekennzeichnet, dass** der Schusskanal (19) innenseitig eine Hinterschneidung aufweist, die einen Montagefreiraum (43) für ein Werkzeug, insbesondere einen Laserkopf oder einen Fräskopf, zur Bildung einer Sollreißstelle (35) für den Airbagdeckel (21) bereitstellt.

11. Airbaganordnung insbesondere nach einem der vorhergehenden Ansprüche, **dadurch gekennzeichnet, dass** ein Airbagdeckel (21) materialeinheitlich und/oder einstückig mit der Schusskanalwand (17) verbunden ist.

12. Airbaganordnung nach Anspruch 11, **dadurch gekennzeichnet, dass** der Airbagdeckel (21) über einen insbesondere schlaufenartig in den Schusskanal ragenden Filmscharnierabschnitt (33) mit der Schusskanalwand (17) verbunden ist, der einen nach oben offenen rinnenförmigen Freiraum (37) begrenzt.

13. Airbaganordnung nach Anspruch 12, **dadurch gekennzeichnet, dass** der Freiraum (37) von einem Abdeckelement (39) abgedeckt ist, das den Freiraum (37) gegenüber einer den Airbagdeckel (39) überdeckenden Schaumschicht (7) abtrennt.

14. Airbaganordnung nach Anspruch 13, **dadurch gekennzeichnet, dass** das Abdeckelement (39) materialeinheitlich und/oder einstückig am Airbagdeckel (21) integriert ist.

15. Airbaganordnung nach Anspruch 12, **dadurch gekennzeichnet, dass** in den vom Filmscharnierabschnitt (33) begrenzten Freiraum (37) ein Füllelement (47) im Wesentlichen ohne eigene Formstabilität, etwa ein Weichschaumelement, eingelegt ist.

16. Airbaganordnung nach einem der vorhergehenden Ansprüche, **dadurch gekennzeichnet, dass** das Betätigungselement (49) zur Bewegungsübertragung auf die Schusskanalwand (17) durch eine Montageöffnung (15) der Schusskanalwand (17) ragt und auf einer außenseitigen Umlenkfläche (51) der Schusskanalwand (17) abgestützt ist.

17. Airbaganordnung nach Anspruch 16, **dadurch gekennzeichnet, dass** die Umlenkfläche (51) der Schusskanalwand (17) durch den Verjüngungsabschnitt (29) bereitgestellt ist.

## Claims

1. Airbag assembly for a motor vehicle, with an airbag module (11) and with a shot-duct wall (17) delimiting a shot duct (19) which can be covered by an airbag cover (21), the shot duct (19) tapering at least partially with its shot-duct cross section in the direction of the airbag cover (21), the airbag assembly being assigned at least one actuating element (49) which, when the airbag module (11) is released, presses the shot-duct wall (17) towards the airbag module (11), **characterized in that** the actuating element (49) is an airbag module-side mounting element (13) for suspending the airbag module (11) in the shot-duct wall (17), and **in that**, when the airbag module (11) is released, the actuating element (49) presses the shot-duct wall (17) against the airbag module (11) from outside.

2. Airbag assembly according to Claim 1, **characterized in that** the shot-duct wall (17) has at least one tapering portion (29), of which the end facing away from the airbag cover (21) merges into a shot-duct part (31) of larger shot-duct cross section.

3. Airbag assembly according to Claim 2, **characterized in that** the tapering portion (29) merges at its end facing the airbag cover (21) into a shot-duct part (27) of smaller shot-duct cross section.

4. Airbag assembly according to Claim 3, **characterized in that** the two shot-duct parts (27, 31) run parallel to one another.

5. Airbag assembly according to one of Claims 2 to 4, **characterized in that** the shot-duct part (31) of larger cross section has a mounting portion (15) on which an airbag module (11) can be mounted.

6. Airbag assembly according to one of Claims 3 to 5, **characterized in that** the shot-duct part (27) of smaller shot-duct cross section is directly a marginal edge (48) delimiting an airbag passage orifice, without longitudinal extent in an airbag shot direction (I).

7. Airbag assembly according to one of the preceding claims, **characterized in that** the shot-duct wall (17) is connectable as a separate component to a basic carrier (5) of an instrument panel (1).

8. Airbag assembly according to Claim 7, **characterized in that** the shot-duct wall (17) has a carrying portion (23), by means of which the shot-duct wall (17) is supported on the instrument panel basic carrier (5).

9. Airbag assembly according to Claim 8, **characterized in that** the carrying portion (23) is designed as a carrying leg on the outside of the shot-duct wall (17).

10. Airbag assembly according to one of the preceding claims, **characterized in that** the shot duct (19) has on the inside an undercut which provides a mounting free space (43) for a tool, in particular a laser head or milling head, for forming a predetermined tearing point (35) for the airbag cover (21).

11. Airbag assembly particularly according to one of the preceding claims, **characterized in that** an airbag cover (21) is connected to the shot-duct wall (17) in a materially unitary manner and/or in one piece.

12. Airbag assembly according to Claim 11, **characterized in that** the airbag cover (21) is connected to the shot-duct wall (17) via a film hinge portion (33) which projects particularly in a loop-like manner into the shot duct and which delimits an upwardly open channel-shaped free space (37).

13. Airbag assembly according to Claim 12, **characterized in that** the free space (37) is covered by a covering element (39) which separates the free space (37) from a foam layer (7) covering the airbag cover (21).

14. Airbag assembly according to Claim 13, **characterized in that** the covering element (39) is integrated on the airbag cover (21) in a materially unitary manner and/or in one piece.

15. Airbag assembly according to Claim 12, **characterized in that** a filling element (47) essentially without specific dimensional stability, for example a soft foam element, is introduced into the free space (37) delimited by the film hinge portion (33).

16. Airbag assembly according to one of the preceding claims, **characterized in that** the actuating element (49), for transmitting movement to the shot-duct wall (17), projects through a mounting orifice (15) of the shot-duct wall (17) and is supported on an outer deflecting surface (51) of the shot-duct wall (17).

17. Airbag assembly according to Claim 16, **characterized in that** the deflecting surface (51) of the shot-duct wall (17) is provided by the tapering portion (29).

## Revendications

1. Agencement d'airbag pour un véhicule automobile comprenant un module d'airbag (11) et une paroi de canal d'éjection (17), qui délimite un canal d'éjection (19) qui peut être recouvert par un couvercle d'airbag (21), le canal d'éjection (19) se rétrécissant au moins en partie avec sa section transversale de canal d'éjection dans la direction du couvercle d'airbag (21), l'agencement d'airbag étant associé à au moins un élément d'actionnement (49) qui, dans le cas d'un déclenchement du module d'airbag (11) presse la paroi du canal d'éjection (17) vers le module d'airbag (11), **caractérisé en ce que** l'élément d'actionnement (49) est un élément de montage (13) du côté du module d'airbag, pour accrocher le module d'airbag (11) dans la paroi du canal d'éjection (17), et **en ce que** l'élément d'actionnement (49), lors du déclenchement du module d'airbag (11), presse la paroi du canal d'éjection (17) depuis l'extérieur contre le module d'airbag (11).

2. Agencement d'airbag selon la revendication 1, **caractérisé en ce que** la paroi du canal d'éjection (17) présente au moins une portion de rétrécissement (29) dont l'extrémité opposée au couvercle d'airbag (21) se prolonge par une partie de canal d'éjection (31) de plus grande section transversale de canal d'éjection.

3. Agencement d'airbag selon la revendication 2, **caractérisé en ce que** la portion de rétrécissement (29) se prolonge au niveau de son extrémité tournée vers le couvercle d'airbag (21) par une partie de canal d'éjection (27) de plus petite section transversale de canal d'éjection.

4. Agencement d'airbag selon la revendication 3, **caractérisé en ce que** les deux parties de canal d'éjection (27, 31) s'étendent parallèlement l'une à l'autre.

5. Agencement d'airbag selon l'une quelconque des revendications 2 à 4, **caractérisé en ce que** la partie de canal d'éjection (31) de plus grande section transversale présente une portion de montage (15) sur laquelle peut être monté un module d'airbag (11).

6. Agencement d'airbag selon l'une quelconque des revendications 3 à 5, **caractérisé en ce que** la partie de canal d'éjection (27) de plus petite section transversale de canal d'éjection devient directement une arête de bord (48) limitant une ouverture de passage d'airbag, sans étendue longitudinale dans une direction d'éjection d'airbag (I).

7. Agencement d'airbag selon l'une quelconque des revendications précédentes, **caractérisé en ce que** la paroi de canal d'éjection (17) peut être connectée en tant que composant séparé à un support de base (5) d'un tableau de bord (1).

8. Agencement d'airbag selon la revendication 7, **caractérisé en ce que** la paroi de canal d'éjection (17) présente une portion de support (23) avec laquelle la paroi de canal d'éjection (17) est supportée sur le support de base du tableau de bord (5).

9. Agencement d'airbag selon la revendication 8, **caractérisé en ce que** la portion de support (23) est réalisée sous la forme d'une branche de support du côté extérieur sur la paroi de canal d'éjection (17).

10. Agencement d'airbag selon l'une quelconque des revendications précédentes, **caractérisé en ce que** le canal d'éjection (19) présente, du côté intérieur, une contre-dépouille qui fournit un espace libre de montage (43) pour un outil, en particulier une tête de laser ou une tête de fraisage, pour former une zone de rupture (35) pour le couvercle de l'airbag (21).

11. Agencement d'airbag, en particulier selon l'une quelconque des revendications précédentes, **caractérisé en ce qu'**un couvercle d'airbag (21) est venu de matière avec, ou est connecté d'une seule pièce à, la paroi du canal d'éjection (17).

12. Agencement d'airbag selon la revendication 11, **caractérisé en ce que** le couvercle d'airbag (21) est connecté par le biais d'une portion de charnière à film (33) saillant notamment en forme de boucle dans le canal d'éjection, à la paroi de canal d'éjection (17), qui délimite un espace libre (37) en forme de rigole ouverte vers le haut.

13. Agencement d'airbag selon la revendication 12, **caractérisé en ce que** l'espace libre (37) est recouvert d'un élément de recouvrement (39), qui sépare l'espace libre (37) par rapport à une couche de mousse (7) recouvrant le couvercle d'airbag (21).

14. Agencement d'airbag selon la revendication 13, **caractérisé en ce que** l'élément de recouvrement (39) est venu de matière avec, ou est intégré d'une seule pièce au couvercle d'airbag (21).

15. Agencement d'airbag selon la revendication 12, **caractérisé en ce que** dans l'espace libre (37) limité par la portion de charnière à film (33) est introduit un élément de remplissage (47) essentiellement sans stabilité de forme propre, par exemple un élément en mousse mou.

16. Agencement d'airbag selon l'une quelconque des revendications précédentes, **caractérisé en ce que** l'élément d'actionnement (49), en vue du transfert du mouvement à la paroi de canal d'éjection (17), fait saillie à travers une ouverture de montage (15) de la paroi de canal d'éjection (17) et est supporté sur une surface de déflexion (51) du côté extérieur, de la paroi de canal d'éjection (17).

17. Agencement d'airbag selon la revendication 16, **caractérisé en ce que** la surface de déflexion (51) de la paroi de canal d'éjection (17) est fournie par la portion de rétrécissement (29).
